# EUROPÄISCHE PATENTSCHRIFT

(11) **EP 1 966 527 B1**
(45) Veröffentlichungstag und Bekanntmachung des Hinweises auf die Patenterteilung: **27.03.2013**
(21) Anmeldenummer: 06828583.2
(22) Anmeldetag: 01.12.2006
(51) Int. Cl.: G01D 18/00, F15B 13/08, F16K 37/00, G01D 5/14

(54) **VERFAHREN ZUR MONTAGE EINER VENTILEINRICHTUNG UND VENTILEINRICHTUNG**
METHOD FOR MOUNTING A VALVE DEVICE, AND VALVE DEVICE
PROCEDE DE MONTAGE D'UN DISPOSITIF DE SOUPAPE ET DISPOSITIF DE SOUPAPE

(30) Priorität: 17.12.2005 DE 102005060565
(43) Veröffentlichungstag der Anmeldung: 10.09.2008
(73) Patentinhaber: Schaeffler Technologies AG & Co. KG, 91074 Herzogenaurach (DE)
(72) Erfinder: GRETHEL, Marco, 77830 Bühlertal (DE)
(86) Internationale Anmeldenummer: PCT/DE2006/002128
(87) Internationale Veröffentlichungsnummer: WO 2007/076750

(56) Entgegenhaltungen:
- EP-A- 1 253 363
- EP-A- 1 489 309
- EP-A- 1 491 862
- EP-A2- 1 069 320
- DE-A1- 19 926 895
- US-A- 5 926 018

## Beschreibung

Die Erfindung betrifft ein Verfahren zur Montage einer Ventileinrichtung mit einem Ventilgehäuse, in dem ein Ventilschieber hin und her bewegbar aufgenommen ist, dessen Position mit Hilfe einer Sensoreinrichtung, insbesondere einer Hallsensoreinrichtung, erfasst wird, die mit mindestens einem Permanentmagnetelement oder mindestens einem magnetischen Flussleitelement zusammenwirkt, das an dem Ventilschieber angebracht ist. Die Erfindung betrifft auch eine Ventileinrichtung, wie sie vorab beschrieben ist.

Eine Ventileinrichtung nach dem Oberbegriff der Patentansprüche 1 und 3 ist aus EP 1 069 320 A2 und der EP 1 489 309 A1 bekannt.

Aufgabe der Erfindung ist es, die Herstell- und Montagekosten einer Ventileinrichtung gemäß dem Oberbegriff des Anspruchs 2 zu reduzieren.

Die Aufgabe ist bei einem Verfahren zur Montage einer Ventileinrichtung gemäß dem Oberbegriff des Anspruchs 1 dadurch gelöst, dass der Ventilschieber vor der Inbetriebnahme der Ventileinrichtung in mindestens eine mit Toleranzen behaftete Ventilschieberposition gebracht wird, die mit einer programmierbaren Sensoreinrichtung exakt erfasst und gespeichert und/ oder in die Sensoreinrichtung einprogrammiert wird. Die Verwendung einer programmierbaren Sensoreinrichtung liefert den Vorteil, dass ein aufwendiges mechanisches Justieren der Sensoreinrichtung relativ zu dem Ventilgehäuse bei der Montage entfallen kann. Unabhängig von Fertigungs- und Montagetoleranzen können bestimmte Ausgangssignale der Sensoreinrichtung einer zugehörigen Ventilschieberposition zugeordnet werden.

Die vorab angegebene Aufgabe ist bei einer Ventileinrichtung mit einem Ventilgehäuse, in dem ein Ventilschieber hin und her bewegbar aufgenommen ist, dessen Position mit Hilfe einer Sensoreinrichtung, insbesondere einer Hallsensoreinrichtung, erfasst wird, die mit mindestens einem Permanentmagnetelement oder mindestens einem magnetischen Flussleitelement zusammenwirkt, das an dem Ventilschieber angebracht ist, dadurch gelöst, dass mindestens eine mit Toleranzen behaftete und von der Sensoreinrichtung exakt erfasste Ventilschieberposition vor der Inbetriebnahme der Ventileinrichtung in die Sensoreinrichtung einprogrammiert und/oder in der Sensoreinrichtung gespeichert ist Das liefert den Vorteil, dass ein mechanisches Justieren der Sensoreinrichtung bei der Endabnahme der Ventileinrichtung entfallen kann. Unabhängig von Fertigungs- und Montagetoleranzen sind bestimmte Ausgangssignale einer zugehörigen Ventilschieberposition zuordenbar.

Ein bevorzugtes Ausführungsbeispiel der Ventileinrichtung ist dadurch gekennzeichnet, dass der Ventilschieber aus einem magnetisch nicht leitenden Material gebildet ist. Der Ventilschieber ist zum Beispiel aus Aluminium gebildet.

Ein weiteres bevorzugtes Ausführungsbeispiel der Ventileinrichtung ist dadurch gekennzeichnet, dass zumindest der Teil des Ventilgehäuses, in dem der Ventilschieber aufgenommen ist, aus einem magnetisch nicht leitenden Material gebildet ist. Das Ventilgehäuse ist zum Beispiel aus Aluminium gebildet.

Ein weiteres bevorzugtes Ausführungsbeispiel der Ventileinrichtung ist dadurch gekennzeichnet, dass das Permanentmagnetelement oder das Flussleitelement direkt an dem Ventilschieber befestigt ist. Die Verwendung eines Adapterstücks aus einem magnetisch nicht leitenden Material zur Aufnahme des Permanentmagnetelements oder des Flussleitelements kann entfallen.

Ein weiteres bevorzugtes Ausführungsbeispiel der Ventileinrichtung ist dadurch gekennzeichnet, dass das Permanentmagnetelement oder das Flussleitelement mit dem Ventilschieber verbördelt ist. Weitere Befestigungsmittel werden nicht benötigt.

Ein weiteres bevorzugtes Ausführungsbeispiel der Ventileinrichtung ist dadurch gekennzeichnet, dass der Ventilschieber an einem Ende ein zentrales Sackloch aufweist, in dem das Permanentmagnetelement oder das Flussleitelement, zumindest teilweise, aufgenommen ist. Dadurch wird auf einfache Art und Weise eine stabile Befestigung des Permanentmagnetelements oder des Flussleitelements an dem Ventilschieber ermöglicht.

Ein weiteres bevorzugtes Ausführungsbeispiel der Ventileinrichtung ist dadurch gekennzeichnet, dass an dem Ende des Ventilschiebers mit dem Sackloch ein Bördelrand ausgebildet ist. Der Bördelrand hat vor dem Verbördeln im Wesentlichen die Gestalt eines Kreiszylindermantels, der koaxial zu der Längsachse des Ventilschiebers angeordnet ist.

Ein weiteres bevorzugtes Ausführungsbeispiel der Ventileinrichtung ist dadurch gekennzeichnet, dass das Flussleitelement einen Befestigungsabschnitt aufweist, der in dem Sackloch aufgenommen ist und der von einer Ringnut begrenzt wird. Die Ringnut dient zur Aufnahme eines umgebördelten Randbereichs des Ventilschiebers.

Ein weiteres bevorzugtes Ausführungsbeispiel der Ventileinrichtung ist dadurch gekennzeichnet, dass das Permanentmagnetelement oder das Flussleitelement die Gestalt eines Rings aufweist, der auf ein Ende des Ventilschiebers aufgeschoben und mit diesem verbördelt ist. Dadurch wird auf einfache Art und Weise eine stabile Befestigung des Permanentmagnetelements oder des Flussleitelements an dem Ventilschieber ermöglicht.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 die Ansicht eines Teilschnitts durch eine Ventileinrichtung gemäß einem ersten Ausführungsbeispiel;
Figur 2 ein Ende eines Ventilschiebers mit einem radial innen angeordneten Ringmagneten;
Figur 3ein Ende eines Ventilschiebers mit einem radial außen angeordneten Ringmagneten;
Figur 4ein Ende eines Ventilschiebers mit einem magnetischen Flussleitelement, das einen Befestigungsabschnitt aufweist, von dem eine Kreisscheibe ausgeht;
Figur 5ein Ende eines Ventilschiebers mit einem kreisscheibenförmigen magnetischen Flussleitelement und
Figur 6ein Ende eines Ventilschiebers mit einem radial außen angeordneten Ringmagneten gemäß einem weiteren Ausführungsbeispiel.

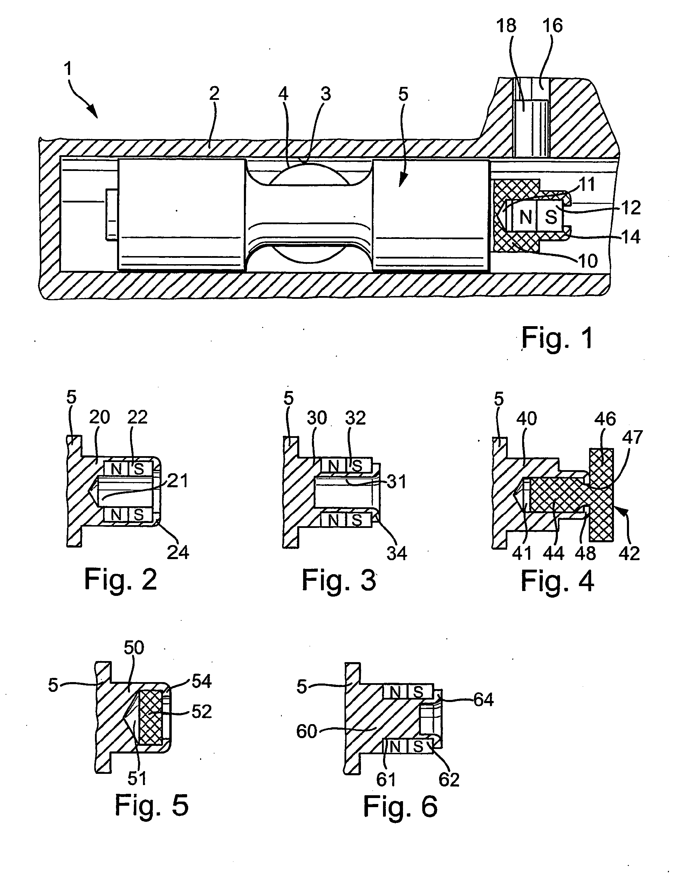

In Figur 1 ist eine Ventileinrichtung 1 im Schnitt dargestellt. Die Ventileinrichtung 1 umfasst ein Ventilgehäuse 2 mit einem Sackloch 3. In dem Sackloch 3, das vorzugsweise von einer Aufnahmebohrung gebildet wird, ist ein Ventilschieber 5 hin und her bewegbar aufgenommen. In Abhängigkeit von der Position des Ventilschiebers 5 in dem Sackloch 3 werden Verbindungen wie z. B. die Ventilöffnung 4 zwischen Kanälen oder Räumen freigegeben und/oder unterbrochen. Bei der Ventileinrichtung 1 handelt es sich vorzugsweise um ein Richtungsventil einer Wankstabilisierungseinrichtung eines Kraftfahrzeugs.

Gemäß einem wesentlichen Aspekt der Erfindung sind sowohl das Ventilgehäuse 2 als auch der Ventilschieber 5 aus einem magnetisch nicht leitenden Material, insbesondere aus Aluminium, gebildet. An einem Ende des Ventilschiebers 5 ist ein zentraler Ansatz 10 einstückig mit dem Ventilschieber 5 verbunden. Der Ansatz 10 weist ein zentrales Sackloch 11 auf, in dem ein im Wesentlichen kreiszylinderförmiger Permanentmagnet 12 aufgenommen ist. Der Permanentmagnet 12 ist durch einen umgebördelten Randbereich 14, der von dem Ansatz 10 ausgeht, in dem Sackloch fixiert.

Radial außerhalb des Permanentmagneten 12 erstreckt sich ein Durchgangsloch 16 in radialer Richtung in dem Ventilgehäuse 2. In dem Durchgangsloch 16 ist ein Hallsensor 18 aufgenommen. Der Hallsensor 18 ist zum Beispiel in das Durchgangsloch 16 eingepresst oder eingeklemmt. Somit können weitere Befestigungsmittel zur Fixierung des Hallsensors 18 in dem Durchgangsloch 16 entfallen.

Gemäß einem weiteren wesentlichen Aspekt der Erfindung ist der Hallsensor 18 programmierbar ausgeführt. Durch die Programmierbarkeit des Hallsensors 18 ist es möglich, dass die verschiedenen Positionen des Ventilschiebers 5 in dem Ventilgehäuse 2 bei der Abnahme der Ventileinrichtung 1 "gelernt" werden. Somit können unabhängig von Fertigungs- und Montagetoleranzen die gewünschten Ausgangssignale beim Erreichen bestimmter Ventilschieberpositionen einprogrammiert werden. Dadurch wird die Verarbeitung eines analogen Ausgangssignals in einem zugehörigen Steuergerät überflüssig. Der Hallsensor 18 kann direkt in einem Hydraulikblock untergebracht werden.

In den Figuren 2 bis 6 ist jeweils nur das Ende des Ventilschiebers 5 mit dem Ansatz dargestellt. Der Rest des Ventilschiebers und das Ventilgehäuse sind so wie in Figur 1 ausgeführt.

Bei dem in Figur 2 dargestellten Ausführungsbeispiel weist das Ende des Ventilschiebers 5 einen Ansatz 20 auf, in dem ein zentrales Sackloch 21 ausgespart ist. In dem Sackloch 21 ist ein ringförmiger Permanentmagnet 22 angeordnet. Der ringförmige Permanentmagnet 22 ist mit Hilfe eines radial nach innen umgebördelten Randbereichs 24 des Ansatzes 20 im Sackloch 21 fixiert.

In Figur 3 weist das Ende des Ventilschiebers 5 einen Ansatz 30 mit einem zentralen Sackloch 31 auf. Radial außerhalb des Sacklochs 31 ist ein ringförmiger Permanentmagnet 32 mit Hilfe eines radial nach außen umgebördelten Randbereichs 34 an dem Ansatz 30 befestigt.

In Figur 4 ist an dem Ende des Ventilschiebers 5 ein Ansatz 40 mit einem zentralen Sackloch 41 vorgesehen. In dem Sackloch 41 ist ein kreiszylinderförmiger Befestigungsabschnitt 44 eines magnetischen Flussleitelements 42 aufgenommen. Der Befestigungsabschnitt 44 ist einstückig mit einer Kreisscheibe 46 verbunden, die sich am Ende des Ventilschiebers 5 außerhalb des Sacklochs 41 erstreckt. Zwischen der Kreisscheibe 46 und dem Befestigungsabschnitt 44 ist eine Ringnut 47 ausgebildet, in die ein umgebördelter Randbereich 48 eingreift, der von dem Ansatz 40 ausgeht.

Bei dem in Figur 5 dargestellten Ausführungsbeispiel geht von dem Ende des Ventilschiebers 5 ein zentraler Ansatz 50 mit einem Sackloch 51 aus. In dem Sackloch 51 ist ein im Wesentlichen kreiszylinderförmiges magnetisches Flussleitelement 52 aufgenommen. Das Flussleitelement 52 ist durch einen radial nach innen umgebördelten Randbereich 54 in dem Sackloch 51 fixiert.

Bei dem in Figur 6 dargestellten Ausführungsbeispiel geht von dem Ende des Ventilschiebers 5 ein zentraler Ansatz 60 aus. Der Ansatz 60 weist radial außen einen Absatz 61 auf. Auf den Absatz 61 ist ein ringförmiger Permanentmagnet 62 aufgeschoben. Der Permanentmagnet 62 wird durch einen radial nach außen umgebördelten Randbereich 64 an dem Absatz 61 fixiert.

### Bezugszeichenliste

- 1.: Ventileinrichtung
- 2.: Ventilgehäuse
- 3.: Sackloch
- 4: Ventilöffnung
- 5.: Ventilschieber
- 10.: Ansatz
- 11.: Sackloch
- 12.: Permanentmagnet
- 14.: Randbereich
- 16.: Durchgangsloch
- 18.: Hallsensor
- 20.: Ansatz
- 21.: Sackloch
- 22.: Permanentmagnet
- 24.: Randbereich
- 30.: Ansatz
- 31.: Sackloch
- 32.: Permanentmagnet
- 34.: Randbereich
- 40.: Ansatz
- 41.: Sackloch
- 42.: Flussleitelement
- 44.: Befestigungsabschnitt
- 46.: Kreisscheibe
- 47.: Ringnut
- 48.: Randbereich
- 50.: Ansatz
- 51.: Sackloch
- 52.: Flussleitelement
- 54.: Randbereich
- 60.: Ansatz
- 61.: Absatz
- 62.: Permanentmagnet
- 64.: Randbereich

## Patentansprüche

1. Verfahren zur Montage einer Ventileinrichtung (1) mit einem Ventilgehäuse (2), in dem ein Ventilschieber (5) hin und her bewegbar aufgenommen ist, dessen Position mit Hilfe einer Sensoreinrichtung (18), erfasst wird, die mit mindestens einem Permanentmagnetelement (12;22;32;62) oder mindestens einem magnetischen Flussleitelement (42;52) zusammenwirkt, das an dem Ventilschieber (5) angebracht ist, **dadurch gekennzeichnet, dass** der Ventilschieber (5) vor der Inbetriebnahme der Venbleinrichtung (1) in mindestens eine mit Toleranzen behaftete Ventilschieberposition gebracht wird, die mit einer programmierbaren Sensoreinrichtung (18) exakt erfasst und gespeichert und/oder in die Sensoreinrichtung (18) einprogrammiert wird.

2. Verfahren zur Montage einer Ventileinrichtung (1) nach Anspruch 1, **dadurch gekennzeichnet, dass** die Sensoreinrichtung (18) eine Haltenmreinfiidntung ist.

3. Ventileinrichtung mit einem Ventilgehäuse (2), in dem ein Ventilschieber (5) hin und her bewegbar aufgenommen ist, dessen Position mit Hilfe einer Sensoreinrichtung (18), , erfasst wird, die mit mindestens einem Permanentmagnetelement (12;22;32;62) oder mindestens einem magnetischen Flussleitelement (42;52) zusammenwirkt, das an dem Ventilschieber (5) angebracht ist, **dadurch gekennzeichnet, dass** mindestens eine mit Toleranzen behaftete und von der Sensoreinrichtung (18) exakt erfasste Ventilschieberposition vor der Inbetriebnahme der Ventileinrichtung (1) in die Sensoreinrichtung (18) einprogrammierbar und/oder in der Sensoreinrichtung (18) speicherbar ist.

4. Ventileinrichtung (1) nach Anspruch 3, **dadurch gekennzeichnet, dass** die Sensoreinrichtung (18) eine Hallsensoreinrichtung ist.

5. Ventileinrichtung nach Anspruch 3 oder 4, **dadurch gekennzeichnet, dass** der Ventilschieber (5) aus einem magnetisch nicht leitenden Material gebildet ist.

6. Ventileinrichtung nach einem der Ansprüche 2 bis 5, **dadurch gekennzeichnet, dass** zumindest der Teil des Ventilgehäuses (2), in dem der Ventilschieber (5) aufgenommen ist, aus einem magnetisch nicht leitenden Material gebildet ist.

7. Ventileinrichtung nach einem der vorstehenden Ansprüche , **dadurch gekennzeichnet, dass** das Permanentmagnetelement (12;22;32;62) oder das Flussleitelement (42;52) direkt an dem Ventilschieber (5) befestigt ist.

8. Ventileinrichtung nach Anspruch 7, dadurch gekenntzeichnet, dass das Permanentmagnetelement (12;Z2;32;62) oder das Flussleitelement (42;52) mit dem Ventilschieber (5) verbördelt ist

9. Ventileinrichtung nach einem der Ansprüche 3 bis 8, **dadurch gekennzeichnet, dass** der Ventilschieber (5) an einem Ende ein zentrales Sackloch (11;21;31;41;51) aufweist, in dem das Permanentmagnetelement (12;22) oder das Flussleitelement (42;52), zumindest teilweise, aufgenommen ist.

10. Ventileinrichtung nach Anspruch 9, **dadurch gekennzeichnet, dass** an dem Ende des Ventilschiebers (5) mit dem Sackloch (11;21;31,41;51) ein Bördelband (14;24;34;48;54) ausgebildet ist.

11. Ventileinrichtung nach Anspruch 9 oder 10, **dadurch gekennzeichnet dass** das Flussleitelement (42) einen Befestigungsabschnitt (44) aufweist, der in dem Sackloch (41) aufgenommen ist und der von einer Ringnut (47) begrenzt wird.

12. Ventileinrichtung nach einem der Ansprüche 3 bis 8, **dadurch gekennzeichnet, dass** das Petmanentmagnetelement (32;62) oder das Flussleitelement die Gestalt eines Rings aufweist, der auf ein Ende des Ventilschiebers (5) aufgeschoben und mit diesem verbördelt ist,

## Claims

1. Method for mounting a valve device (1) with a valve housing (2), in which a valve slide (5) is received such that it can be moved to and fro, the position of which is detected with the aid of a sensor device (18) which interacts with at least one permanent-magnet element (12; 22; 32; 62) or at least one magnetic flux guiding element (42; 52) which is attached to the valve slide (5), **characterized in that**, before the start of operation of the valve device (1), the valve slide (5) is moved into at least one valve-slide position which is affected by tolerances, is detected exactly by way of a programmable sensor device (18) and is stored and/or is programmed into the sensor device (18).

2. Method for mounting a valve device (1) according to Claim 1, **characterized in that** the sensor device (18) is a Hall sensor device.

3. Valve device with a valve housing (2), in which a valve slide (5) is received such that it can be moved to and fro, the position of which is detected with the aid of a sensor device (18) which interacts with at least one permanent-magnet element (12; 22; 32; 62) or at least one magnetic flux guiding element (42; 52) which is attached to the valve slide (5), **characterized in that**, before the start of operation of the valve device (1), at least one valve-slide position which is affected by tolerances and is detected exactly by the sensor device (18) can be programmed into the sensor device (18) and/or can be stored in the sensor device (18).

4. Valve device (1) according to Claim 3, **characterized in that** the sensor device (18) is a Hall sensor device.

5. Valve device according to Claim 3 or 4, **characterized in that** the valve slide (5) is formed from a magnetically non-conducting material.

6. Valve device according to one of Claims 2 to 5, **characterized in that** at least the part of the valve housing (2), in which the valve slide (5) is received, is formed from a magnetically non-conducting material.

7. Valve device according to one of the preceding claims, **characterized in that** the permanent-magnet element (12; 22; 32; 62) or the flux guiding element (42; 52) is fastened directly to the valve slide (5).

8. Valve device according to Claim 7, **characterized in that** the permanent-magnet element (12; 22; 32; 62) or the flux guiding element (42; 52) is crimped to the valve slide (5).

9. Valve device according to one of Claims 3 to 8, **characterized in that** the valve slide (5) has a central blind bore (11; 21; 31; 41; 51) at one end, in which blind bore (11; 21; 31; 41; 51) the permanent-magnet element (12; 22) or the flux guiding element (42; 52) is received, at least partially.

10. Valve device according to Claim 9, **characterized in that** a crimp band (14; 24; 34; 48; 54) is formed at the end of the valve slide (5) with the blind bore (11; 21; 31; 41; 51).

11. Valve device according to Claim 9 or 10, **characterized in that** the flux guiding element (42) has a fastening section (44) which is received in the blind bore (41) and which is delimited by an annular groove (47).

12. Valve device according to one of Claims 3 to 8, **characterized in that** the permanent-magnet element (32; 62) or the flux guiding element has the shape of a ring which is pushed onto one end of the valve slide (5) and is crimped to the latter.

## Revendications

1. Procédé de montage d'un dispositif de soupape (1) comprenant un boîtier de soupape (2) dans lequel est reçu, de manière déplaçable d'avant en arrière, un tiroir de soupape (5), dont la position est détectée à l'aide d'un dispositif de capteur (18), qui coopère avec au moins un élément d'aimant permanent (12 ; 22 ; 32 ; 62) ou au moins un élément conducteur de flux magnétique (42 ; 52), qui est monté sur le tiroir de soupape (5), **caractérisé en ce que** le tiroir de soupape (5), avant la mise en service du dispositif de soupape (1), est amené dans au moins une position de tiroir de soupape soumise à des tolérances, qui est détectée exactement par un dispositif de capteur programmable (18) et est stockée et/ou est programmée dans le dispositif de capteur (18).

2. Procédé de montage d'un dispositif de soupape (1) selon la revendication 1, **caractérisé en ce que** le dispositif de capteur (18) est un dispositif de capteur de Hall.

3. Dispositif de soupape comprenant un boîtier de soupape (2) dans lequel est reçu, de manière déplaçable d'avant en arrière, un tiroir de soupape (5), dont la position est détectée à l'aide d'un dispositif de capteur (18), qui coopère avec au moins un élément d'aimant permanent (12 ; 22 ; 32 ; 62) ou au moins un élément conducteur de flux magnétique (42 ; 52), qui est monté sur le tiroir de soupape (5), **caractérisé en ce qu'**au moins une position de tiroir de soupape soumise à des tolérances et détectée exactement par le dispositif de capteur (18) peut être programmée dans le dispositif de capteur (18) et/ou stockée dans le dispositif de capteur (18) avant la mise en service du dispositif de soupape (1).

4. Dispositif de soupape (1) selon la revendication 3, **caractérisé en ce que** le dispositif de capteur (18) est un dispositif de capteur de Hall.

5. Dispositif de soupape selon la revendication 3 ou 4, **caractérisé en ce que** le tiroir de soupape (5) est formé d'un matériau non conducteur magnétiquement.

6. Dispositif de soupape selon l'une quelconque des revendications 2 à 5, **caractérisé en ce qu'**au moins la partie du boîtier de soupape (2) dans laquelle est reçu le tiroir de soupape (5) est formée d'un matériau non conducteur magnétiquement.

7. Dispositif de soupape selon l'une quelconque des revendications précédentes, **caractérisé en ce que** l'élément d'aimant permanent (12 ; 22 ; 32 ; 62) ou l'élément conducteur de flux (42 ; 52) est fixé directement sur le tiroir de soupape (5).

8. Dispositif de soupape selon la revendication 7, **caractérisé en ce que** l'élément d'aimant permanent (12 ; 22 ; 32 ; 62) ou l'élément conducteur de flux (42 ; 52) est bridé au tiroir de soupape (5).

9. Dispositif de soupape selon l'une quelconque des revendications 3 à 8, **caractérisé en ce que** le tiroir de soupape (5) présente à une extrémité un trou borgne central (11 ; 21 ; 31 ; 41 ; 51) dans lequel l'élément d'aimant permanent (12 ; 22) ou l'élément conducteur de flux (42 ; 52) est au moins partiellement reçu.

10. Dispositif de soupape selon la revendication 9, **caractérisé en ce qu'**à l'extrémité du tiroir de soupape (5) comprenant le trou borgne (11 ; 21 ; 31 ; 41 ; 51) est réalisée une bande de bordage (14 ; 24 ; 34 ; 48 ; 54).

11. Dispositif de soupape selon la revendication 9 ou 10, **caractérisé en ce que** l'élément conducteur de flux (42) présente une portion de fixation (44), qui est reçue dans le trou borgne (41) et qui est limitée par une rainure annulaire (47).

12. Dispositif de soupape selon l'une quelconque des revendications 3 à 8, **caractérisé en ce que** l'élément d'aimant permanent (32 ; 62) ou l'élément conducteur de flux présente la forme d'une bague qui est poussée sur une extrémité du tiroir de soupape (5) et qui est bridée avec celui-ci.
